# EUROPEAN PATENT SPECIFICATION

(11) **EP 1 661 122 B1**
(45) Date of publication and mention of the grant of the patent: **08.10.2008**
(21) Application number: 04757347.2
(22) Date of filing: 28.07.2004
(51) Int. Cl.: G10L 15/28

(54) **SYSTEM AND METHOD OF OPERATING A SPEECH RECOGNITION SYSTEM IN A VEHICLE**
SYSTEM UND VERFAHREN ZUM BETRIEB EINES SPRACHERKENNUNGSSYSTEMS IN EINEM FAHRZEUG
SYSTEME ET PROCEDE D'UTILISATION D'UN SYSTEME DE RECONNAISSANCE VOCALE DANS UN VEHICULE

(30) Priority: 29.08.2003 US 498830 P
(43) Date of publication of application: 31.05.2006
(73) Proprietor: Johnson Controls Technology Company, Holland, MI 49423 (US)
(72) Inventor: CHUTORASH, Richard, J., Oakland Township, MI 48306 (US); DOUTHITT, Brian, L., Holland, MI 49424 (US)
(74) Representative: Wolff, Felix
(86) International application number: PCT/US2004/024286
(87) International publication number: WO 2005/024781

(56) References cited:
- WO-A-01/99096
- KUHN T ET AL: "Hybrid in-car speech recognition for mobile multimedia applications" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 2009-2013, XP010342272 ISBN: 0-7803-5565-2
- PATENT ABSTRACTS OF JAPAN vol. 2003, no. 01, 14 January 2003 (2003-01-14) -& JP 2002 280950 A (DENSO CORP), 27 September 2002 (2002-09-27)

## Description

### BACKGROUND OF THE INVENTION

The present application relates generally to speech recognition systems in vehicles, such as automotive vehicles. One such system is a hands-free telephone system having a microphone and speakers mounted in the interior of a vehicle and a processing circuit which processes spoken commands from a vehicle occupant and performs telephone operations, such as making a telephone call. Speech recognition is used in this system to recognize a spoken command from a vehicle occupant to make a telephone call and to receive a telephone number via spoken words from the vehicle occupant. The processing circuit places the telephone call and provides an audio communication link between the vehicle occupant and the telephone system.

One drawback of prior hands-free telephone systems in vehicles was that the telephone system was not easily upgradeable because it was mounted integrally with the vehicle and was not made compatible with wireless telephones. Therefore, an improved hands-free telephone system has been developed which is configured to provide telephone services between a vehicle occupant and the occupant's own mobile telephone which is located in the vicinity of the vehicle (e.g., in a cradle, in the occupant's pocket or briefcase, etc.). In such a system, a telephone call is placed by the vehicle occupant through the hands-free telephone system mounted integral to the vehicle which creates a wireless communication link with the occupant's mobile phone. The mobile phone becomes a conduit between the hands-free telephone system and the public telephone network.

In such a hands-free telephone system, the speech recognition algorithms require a large amount of processing power and memory, and must be programmed to look for key words in the spoken command and carry out functions by invoking software applications. Because of physical size and cost restraints, processing power and memory are limited in such a vehicle-mounted module. Furthermore, if additional functions are to be added to the hands-free system, new applications to run the functions must be developed and implemented on the hands-free system. This requires additional processing power and memory, and, in the automotive application, requires that the vehicle owner return to the service dealer to receive upgrades to the software operating on the hands-free system.

The article "Hybrid in-car speech recognition for mobile multimedia applications", Kuhn T et al, 1999 IEEE Vehicular technology conference discloses an in-car speech recognizer complemented with a large vocabulary recognizer running on a server. JP-A-2002/280950 discloses a car navigation system which accesses the Internet via bluetooth and GSM. WO-A-01/99096 discloses a client that sends a phonemic lattice to a server.

Accordingly, there is a need for a system and method of operating a speech recognition system in a vehicle which can be configured with additional applications without having to develop and distribute the additional applications onto the hands-free module. Further, there is a need for a system and method of operating a speech recognition system in a vehicle that uses context processing in a more efficient manner to assist the speech recognition engine in determining how to execute a spoken command. Further, there is a need for a system and method of operating a speech recognition system in a vehicle that enables applications to be added without reprogramming the embedded hands-free module or greatly increasing its need for memory.

The teachings hereinbelow extend to those embodiments which fall within the scope of the appended claims, regardless of whether they accomplish one or more of the above-mentioned needs.

### SUMMARY OF THE INVENTION

According to the invention there are provided a method of operating a speech recognition system as set forth in claim 1, a method of operating a remote speech recognition server as set forth in claim 9, and a speech recognition system as set forth in claim 13. Prfeferred embodiments are set forth in the dependent claims.

### BRIEF DESCRIPTION OF THE DRAWINGS

The invention will become more fully understood from the following detailed description, taken in conjunction with the accompanying drawings, wherein like reference numerals refer to like parts, and in which:

FIG. 1 is a block diagram of a system for operating a speech recognition system in a vehicle, according to an exemplary embodiment;

FIG. 2 is a flowchart of a method for operating a speech recognition system in a vehicle, according to an exemplary embodiment;

FIG. 3 is a flowchart of a method of operating a remote speech recognition server which services a vehicle-based speech recognition system, according to an exemplary embodiment; and

FIG. 4 is a schematic diagram illustrating a system and method for operating a speech recognition system in a vehicle, according to an exemplary embodiment.

### DETAILED DESCRIPTION OF EXEMPLARY EMBODIMENTS

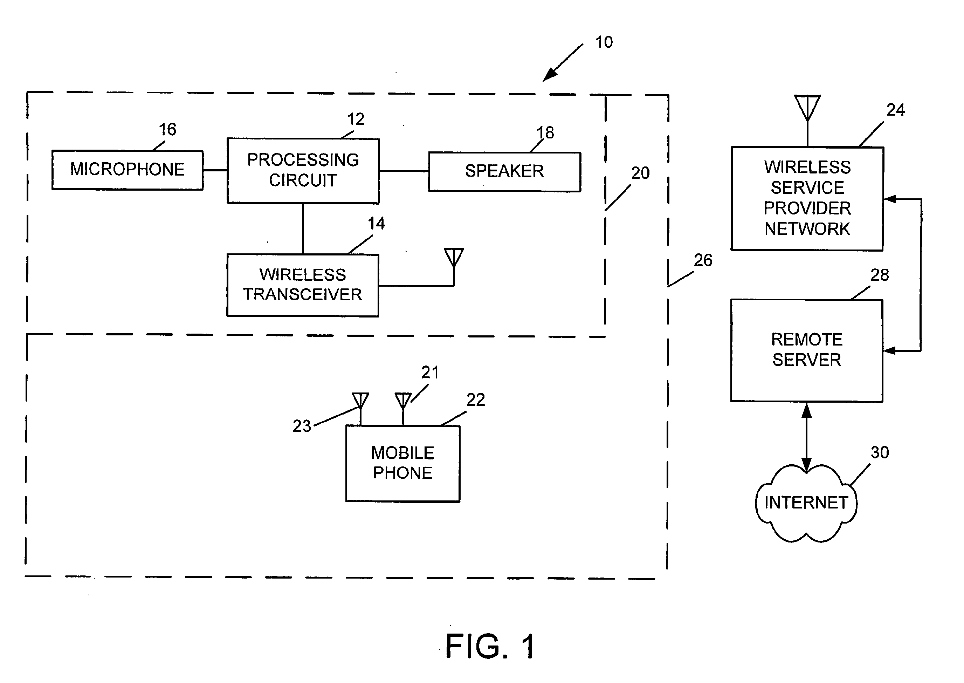

Referring to FIG. 1, a speech recognition system 10 comprises a processing circuit 12 coupled to a wireless transceiver 14, a microphone 16, and a speaker 18. Speech recognition system 10 is coupled to a vehicle interior element 20, such as an instrument panel, overhead compartment, rearview mirror, vehicle seat, or other vehicle interior element.

Processing circuit 12 can include one or more analog or digital components, such as microprocessors, microcontrollers, application specific integrated circuits (ASICs), or other processing circuitry. Processing circuit 12 can include memory, including volatile and nonvolatile memory for storing a computer program or other software to perform the functions described herein. Microphone 16 can include one or more microphones configured to receive a spoken command from a vehicle occupant. The spoken command can be any word that the occupant utters or provides to system 10 to cause system 10 or another system to perform a function. Speaker 18 is configured to receive audio output data from processing circuit 12 (e.g., an audible communication from another party to a telephone call, information prompts or other messages generated by processing circuit 12, etc.). Speaker 18 can be part of the vehicle radio/tape/CD/MP3 Player, or can be a dedicated speaker serving only system 10.

Wireless transceiver 14 can be a communication circuit including analog and/or digital components configured to transmit and receive wireless data in any of a variety of data transmission formats, such as a Bluetooth communications protocol, an IEEE 802.11 communications protocol, or other personal area network protocols or other wireless communications protocols or data formats.

FIG. 1 also illustrates a mobile phone 22 which can be a cellular phone, PCS-based phone, or other mobile telephone system configured to communicate with wireless transceiver 14 and a wireless service provider network 24. Mobile phone 22 can include a plurality of transceiver circuits, for example, a Bluetooth transceiver circuit configured to communicate with wireless transceiver 14 and a cellular (e.g., CDMA, TDMA, etc.) communication format configured to communicate with wireless service provider network 24. Accordingly, in one embodiment, mobile phone 22 may include multiple antennas 21, 23. For example, antenna 21 may be used to communicate with wireless transceiver 14 (e.g., via Bluetooth, 802.11, etc.) and antenna 23 may be used to communicate with wireless service provider network 24 (e.g., via CDMA, TDMA, GSM, etc.). Alternatively, mobile phone 22 may include a single antenna. Mobile phone 22 is illustrated as being within vehicle 26 and can be located anywhere within the proximity of vehicle 26, such as, in an occupant's pocket or briefcase, in the trunk, or within a range of communication with wireless transceiver 14.

FIG. 1 further illustrates a remote server 28 which is a computer or system of computers which can be operated by a car manufacturer, the supplier of system 20, the supplier of speech recognition software operable on processing circuit 12, or another third party. Remote server 28 is coupled to the Internet 30 and configured to receive data from Internet 30 via a wired or wireless connection and to provide data through network 24 to system 10, for example via mobile phone 22.

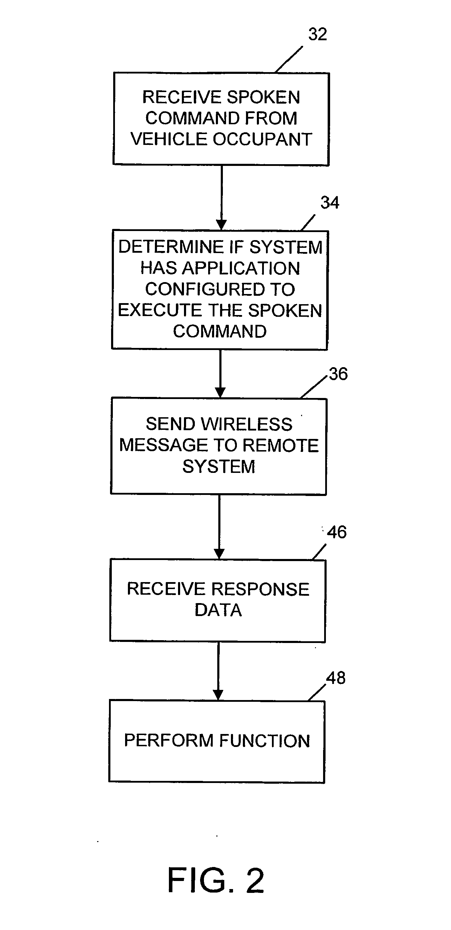

Referring now to FIG. 2, a method of operating system 10 will be described, according to an exemplary embodiment. At step 32, system 10 is configured to receive a spoken command from a vehicle occupant. For example, the spoken command may be "Call John Doe at home" or "What is the weather in Detroit?" At step 34, processing circuit is configured to determine if system 10 has an application configured to execute the spoken command. An application can be any software portion, function, or object which operates on or processes the spoken command, which operations can include speech recognition decision logic, generating prompts to provide to the occupant, comparing the command to predetermined key words or a vocabulary, requests for data from other applications, functions, or objects, etc. According to one example, a speech recognition function or engine recognizes the key word "call" and invokes or applies a hands-free dialing application which determines that the occupant uttered the name (or voice tag) "John Doe" and location "home" for which processing circuit 12 has a phone number in a prestored phone book. The hands-free dialing application can then recall the phone number from the address book in memory (or invoke a phone book application to perform this function) and initiate a dialing sequence to dial a phone call via wireless transceiver 14, mobile phone 22, and wireless service provider network 24 (FIG. 1).

In another example, system 10 will determine that it does not have an application configured to execute the spoken command. For example, the speech recognition function recognizes the word "weather" (or does not recognize any words in the spoken command). In this case, as shown at step 36, a wireless message comprising spoken command data is transmitted to a remote system, specifically remote speech recognition server 28. The spoken command data can take a variety of forms, and in one exemplary embodiment is at least a portion or all of a phoneme-based representation of the spoken command. Phonemes are phonetic units of the spoken command which can be detected by a speech recognition function. By transmitting a phoneme-based representation, which can include one or more phonemes of the spoken command, the transmission time of the spoken command data to remote server 28 can be greatly reduced as compared to transmitting a complete digitization of the spoken command. Alternatively, spoken command data can comprise the complete digitization of the spoken command, a text representation of one or more recognized words as recognized by the speech recognition function, a plurality of possible recognized words, or other data based on the spoken command.

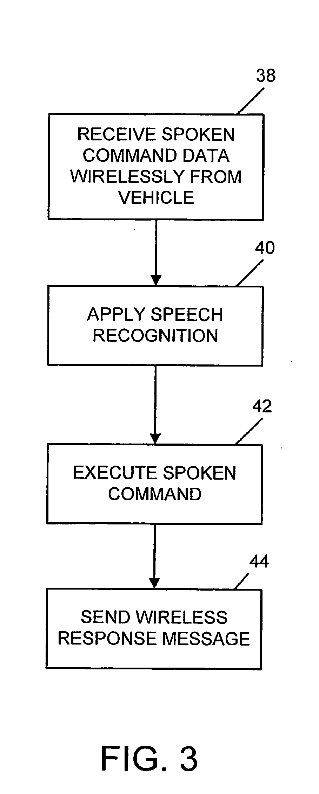

As shown in FIG. 3, remote server 28 is configured to receive the spoken command data in a wireless message from the vehicle-based system 10 at a step 38. Remote server 28 is configured to apply speech recognition software, if needed, to the spoken command data, as shown in step 40. Remote server 28 is further configured to execute the spoken command with an application stored at remote server 28 or accessed by remote server 28, as shown at step 42. Remote server 28 can execute the spoken command with an application by, for example, applying a speech recognition engine or function to recognize a key word in the spoken command and to invoke the appropriate application from a plurality of prestored applications to determine the details of the requests in the spoken command. The application can further be configured to act on the requests. For example, if the spoken command is "Get JCI stock price", the application can be configured to access a web page at a remote server via the Internet 30, obtain the stock price for the ticker symbol JCI, and send the response via a wireless message (step 44) through mobile phone 22 to system 10.

Returning to FIG. 2, system 10 is configured to receive response data from remote server 28 at a step 46 and to perform a function at a step 48 based on the response data. The function can include providing an output to the occupant based on the response data by, for example, providing a voice response to the occupant via speaker 18 (e.g., by converting the response data in a text-to-speech converter), displaying the data in graphical or textual format, and/or performing some other function based on the response data. The voice response data could be presented to the occupant in multiple modes.

Advantageously, remote server 28 can include much greater processing and memory capabilities to run a more rigorous speech recognition algorithm on the spoken command and can further request desired information from other network-based resources, via the Internet or via other networks. Furthermore, new functions can be accessible to system 10 by storing the new applications (e.g., containing vocabulary, operator prompts, and decision logic) on one or more remote servers 28 to be accessed by system 10. Software on processing circuit 12 does not need to be substantially redesigned, if at all, or even updated.

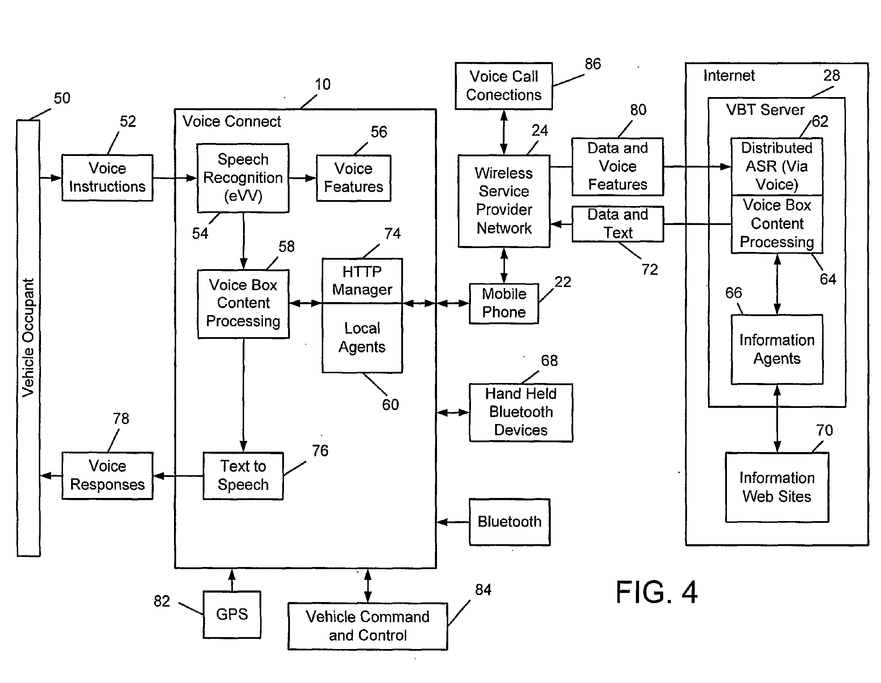

Referring now to FIG. 4, a system and method of operating a speech recognition system in a vehicle will be described according to an exemplary embodiment. A vehicle occupant 50 provides voice instructions or a spoken command 52 to system 10, shown as an embedded telematics module in this exemplary embodiment. A speech recognition function or software 54 is configured to recognize words or phrases in the spoken command. Speech recognition function 54 can comprise any speech recognition software or engine, for example, Embedded Via Voice®, manufactured by International Business Machines Corporation. Speech recognition function 54 can also be configured to generate a phoneme-based representation of the spoken command, also called voice features 56. Speech recognition function 54 also accesses, in this exemplary embodiment, a context processing function 58, for example, a VoiceBox interactive conversation engine manufactured by VoiceBox Technologies, Inc., Kirkland, Washington, which assists speech recognition function 54 to determine the meaning of a spoken command and how to execute it. Context processing refers to a speech recognition function which uses words within a multi-word spoken command or utterance to determine the proper recognized word for other words within the multi-word spoken command. Any of a variety of context processors can be used in this exemplary embodiment. In this embodiment, speech recognition function 54 selectively invokes context processing function 58. Functions 54 and 58 are adjunct to one another, but may alternatively be one integrated software program. Speech recognition 54 and context processing 58 can further utilize an N-best recognition algorithm which identifies and ranks a plurality of recognitions for each word in a spoken command and provides those recognitions to a context processing function 58 to assist in speech recognition.

In this exemplary embodiment, speech recognition function 54 is configured to compare a recognized word to a plurality of predetermined key words to determine if system 10 has an application configured to execute the spoken command. These applications can be called local agents and are identified as local agents 60 in FIG. 4. An example of a local agent 60 might be a hands-free dialing or other telephone dialing application to execute the spoken command when the spoken command is a telephone dialing command. If system 10 determines that none of local agents 60 can be used to execute the spoken command, for example if the recognized words provided by speech recognition 54 do not match a predetermined key word or if a key word match is found for which system 10 knows it does not have a local agent (e.g., "weather" in one example), system 10 is configured to send a wireless message comprising spoken command data to or through mobile phone 22 to network 24 and to remote server 28. System 10 is configured to transmit the wireless message via wireless transceiver 14 in any of a variety of formats or protocols, such as Bluetooth, IEEE 802.11b, IEEE 802.11g or Home RF protocols. Accordingly, system 10 and mobile phone 22 each comprise suitable communications circuitry.

Mobile phone 22 can relay or forward the wireless message via network 24 to remote server 28. According to one example, a Dial-Up Networking (DUN) connection can be used, which makes the transmission of the wireless message through the phone transparent. Other protocols, such as Short Message Service (SMS) could be used. Remote server 28 can operate speech recognition and/or context processing software; for example, remote server 28 can operate the same speech recognition and context processing software as system 10, or can operate a more robust version of the software, since server 28 need not have the processing power and memory limitations of an embedded system. Thus, remote server 28 comprises speech recognition function 62 and context processing function 64. Further, various remote information agents or applications 66 can be accessed by context processing function 64 in order to execute the spoken command.

According to one exemplary embodiment, some spoken commands require off-board resources (i.e., resources not available within system 10, such as stock prices from an Internet-based server) while other spoken commands only require resources contained on-board (e.g., hands-free dialing resources, such as a hands-free dialing application, a phone book, etc.). The former are remote or distributed or off-board resources, and the latter are local or on-board resources.

Context processing functions 58 and 64 are optional. Conventional speech recognition engines are typically based on a predetermined vocabulary of words, which requires the vehicle occupant 50 to know a predetermined command structure. This may be acceptable for simpler applications, but for more complicated applications, the "natural language" understanding provided by context processing is advantageous. For example, a single natural language phrase "What is the weather in Detroit?" can replace a command structure such as: user: "weather," hands-free system: "What city, please?" user: "Detroit." Furthermore, natural language allows the request to be made in different forms such as "Get me the forecast for Detroit" or "Detroit weather forecast."

Local agents or applications 60 can include a telephone dialing application, a set-up application, a configure application, a phone book application, and/or other applications. For example, the set-up application can be configured to provide a Bluetooth pairing function with a Bluetooth-enabled device 68, such as a personal digital system, mobile phone, etc. The configure application can be configured to allow the occupant to establish preferences for the behavior (user profile) of system 10 or other modules/functions in the vehicle. The phone book application can be configured to create, edit, and delete phone book entries in response to spoken commands and to provide operator prompts via voice responses 78 through speaker 18 to guide occupant 50 through phone book functions.

Remote server 28 is configured to determine if the spoken command request data is available from a website 70 stored on a server accessible via the Internet. Remote server 28 is configured to receive data from website 70 and provide the data in a wireless response message 72. Wireless response message 72 can include data, text, and/or other information provided via network 24 and phone 22 to system 10. Optionally, a hypertext transfer protocol (HTTP) manager 74 operable on system 10 (and/or on remote server 28) can be provided to facilitate transmission and receipt of messages in a hypertext or other markup language. Alternatively, other data formats can be used. System 10 then is configured to perform a function based on the wireless response message. In one example, a text-to-speech converter 76 converts response data to speech and provides a voice response 78 to vehicle occupant 50, for example, "JCI stock price is 100". As shown at element 80 and described hereinabove spoken command data 80 provided to remote server 28 can take any of a variety of forms, such as phonemetric data or other data.

The functions that can be performed by system 10 are not limited to telephone dialing and acquiring data from Internet web pages. According to another example, a location determining system 82 (e.g., a global positioning system, dead reckoning system, or other such system) is configured to provide vehicle location information to system 10). System 10 can be configured to retrieve navigation information from remote server 28 and use information from GPS 82 to provide navigation data to vehicle occupant 50. According to another exemplary embodiment, the vehicle occupant 50 can provide vehicle command and control functions via a vehicle bus 84 which is coupled to system 10. For example, system 10 can be configured to receive a spoken command to control HVAC options, radio selections, vehicle seat position, interior lighting, etc. According to another example, a music management function can be provided by coupling a hand-held Bluetooth-enabled music source 68 (e.g., an MP3 player, laptop personal computer with a built-in or add-on Bluetooth transceiver, or a headset controlled by spoken commands via system 10. According to another example, system 10 can provide vehicle location and heading and/or traffic information. According to another example, communication functions can be provided by system 10, such as hands-free telephone calling, voice memo e-mail sending and receiving e-mail notification, wherein the e-mails can be converted text-to-speech and provided via voice responses 78. According to another example, calendar/to-do list functions can be provided; for example, a to-do list can be converted text-to-speech from a hand-held Bluetooth device 68, such as a personal digital assistant, laptop computer, etc. According to another example, personalized news functions can be provided in response to a spoken command request either from a predetermined Internet service provider source, such as www.yahoo.com or from user selectable sources via spoken commands. Other functions are contemplated.

As illustrated at voice call connection 86, mobile phone 22 and network 24 are configured to provide hands-free phone operation with system 10 for a voice phone call between a third party and vehicle occupant 50.

While the exemplary embodiments illustrated in the FIGS. and described above are presently preferred, it should be understood that these embodiments are offered by way of example only. For example, the teachings herein can be applied to any speech recognition system in a vehicle and is not limited to hands-free telephone applications. Accordingly, the present invention is not limited to a particular embodiment, but extends to various modifications that nevertheless fall within the scope of the appended claims.

## Claims

1. A method of operating a speech recognition system in a vehicle, whereby a spoken command is received from a vehicle occupant;
the system determines if it has an application configured to execute the spoken command;
a phoneme-based representation of the spoken command is generated; based on the determining step, a wireless message comprising spoken command data and at least a portion of the phoneme-based representation are sent by means of a wireless transceiver of the system to a mobile telephone in the proximity of the vehicle, and then through the molile telephone to a remote system; response data from the remote system is received; and a function based on the response data is performed.

2. A method according to claim 1, further comprising: based on the determining step, applying a telephone dialing application to execute the spoken command when the spoken command is a telephone dialing command.

3. A method according to claim 1, wherein the step of sending comprises sending the wireless message to a remote speech recognition server.

4. A method according to claim 1, wherein the step of sending comprises sending the wireless message in a Bluetooth communications protocol.

5. A method according to claim 1, wherein the determining step comprises:
applying a speech recognition function to the spoken command to generate a recognized word; and
comparing the recognized word to a plurality of predetermined keywords to determine if the speech recognition system has an application configured to execute the spoken command.

6. A method according to claim 5, wherein, if the recognized word does not match a predetermined keyword, sending the wireless message comprising spoken command data to the remote system.

7. A method according to claim 1, wherein the function is providing an output to the occupant based on the response data.

8. A method according to claim 7, further comprising converting response data text to speech to provide a voice response to the occupant.

9. A method of operating a remote speech recognition server which services a vehicle-based speech recognition system, comprising, at the remote speech recognition server:
receiving a wireless message comprising spoken command data and a phoneme-based representation of the spoken command data from the vehicle-based speech recognition system through a mobile telephone in the proximity of the vehicle; applying a speech recognition function to the spoken command data; executing the spoken command with an application; and
sending a wireless response message based on the executing step to the vehicle.

10. A method according to claim 9, further comprising:
determining that the spoken command requests data available from a remote server accessible via the Internet;
requesting data from the remote server;
providing the data in the wireless response message.

11. A method according to claim 9, further comprising applying a context processor application to the spoken command to execute the spoken command.

12. A method according to claim 9, further comprising determining which of a plurality of server-based applications to use in executing the spoken command.

13. A speech recognition system for a vehicle, comprising:
a microphone (16) configured to receive a spoken command from a vehicle occupant;
a processing circuit (12) configured to determine if the speech recognition system has an application configured to execute the spoken command and to generate spoken command data based on the spoken command;
a speech recognition module configured to generate a phoneme-based representation of the spoken command;
a wireless transceiver circuit (14) having a wireless link to a mobile telephone (22), wherein the wireless transceiver circuit (14) is configured to transmit a wireless message comprising the spoken command data and a phoneme-based representation of the spoken command data through the mobile telephone (22) to a remote system (28) and to receive response data from the remote system (28), wherein the processing circuit (12) is configured to perform a function based on the response data.

14. A speech recognition system according to claim 13, wherein the processing circuit is further configured to apply a telephone dialing application to execute the spoken command when the spoken command is a telephone dialing command.

15. A speech recognition system according to claim 13, wherein determining if the speech recognition system has an application configured to execute the spoken command includes applying a speech recognition function to the spoken command to generate a recognized word and comparing the recognized word to a plurality of predetermined keywords to determine if the speech recognition system has an application configured to execute the spoken command.

16. A speech recognition system according to claim 15, wherein, if the recognized word does not match a predetermined keyword, the wireless transceiver transmits the spoken command data to the remote system.

17. A speech recognition system according to claim 13, wherein the function is providing an output to the occupant based on the response data.

18. A speech recognition system according to claim 17, wherein the processing circuit is further configured to convert the response data text to speech to provide a voice response to the occupant.

## Patentansprüche

1. Verfahren zum Betrieb eines Spracherkennungssystems in einem Fahrzeug, wobei ein gesprochener Befehl von einem Fahrzeuginsassen empfangen wird; wobei
das System bestimmt, ob es eine Anwendung aufweist, die dafür ausgelegt ist, den gesprochenen Befehl auszuführen;
der gesprochene Befehl ausgeführt wird;
eine auf Phonemen basierende Darstellung des gesprochenen Befehls erzeugt wird;
auf der Basis des Bestimmungsschritts eine drahtlose Nachricht, die Daten gesprochener Befehle umfaßt, und mindestens ein Teil der auf Phonemen basierenden Darstellung mittels eines drahtlosen Sender/Empfängers des Systems zu einem Mobiltelefon in der Nähe des Fahrzeugs und dann durch das Mobiltelefon zu einem abgesetzten System gesendet werden;
Antwortdaten aus dem abgesetzten System empfangen werden; und
eine auf den Antwortdaten basierende Funktion ausgeführt wird.

2. Verfahren nach Anspruch 1, ferner umfassend:
Anwenden einer Telefon-Wählanwendung auf der Basis des Bestimmungsschritts, um den gesprochenen Befehl auszuführen, wenn der gesprochene Befehl ein Telefon-Wählbefehl ist.

3. Verfahren nach Anspruch 1, wobei der Schritt des Sendens umfaßt, die drahtlose Nachricht zu einem abgesetzten Spracherkennungsserver zu senden.

4. Verfahren nach Anspruch 1, wobei der Schritt des Sendens umfaßt, die drahtlose Nachricht in einem Bluetooth-Kommunikationsprotokoll zu senden.

5. Verfahren nach Anspruch 1, wobei der Bestimmungsschritt folgendes umfaßt:
Anwenden einer Spracherkennungsfunktion auf den gesprochenen Befehl, um ein erkanntes Wort zu erzeugen; und
Vergleichen des erkannten Worts mit mehreren vorbestimmten Schlüsselwörtern, um zu bestimmen, ob das Spracherkennungssystem eine Anwendung aufweist, die dafür ausgelegt ist, den gesprochenen Befehl auszuführen.

6. Verfahren nach Anspruch 5, wobei, wenn das erkannte Wort nicht mit einem vorbestimmten Schlüsselwort übereinstimmt, die drahtlose Nachricht, die Daten gesprochener Befehle umfaßt, zu dem abgesetzten System gesendet wird.

7. Verfahren nach Anspruch 1, wobei die Funktion auf der Basis der Antwortdaten dem Insassen eine Ausgabe gibt.

8. Verfahren nach Anspruch 7, bei dem ferner Antwortdatentext in Sprache umgesetzt wird, um dem Insassen eine Sprachantwort zu geben.

9. Verfahren zum Betrieb eines abgesetzten Spracherkennungsservers, der ein fahrzeuggestütztes Spracherkennungssystem versorgt, mit den folgenden Schritten in dem abgesetzten Spracherkennungsserver:
Emfangen einer drahtlosen Nachricht, die Daten gesprochener Befehle umfaßt, und einer auf Phonemen basierenden Darstellung der Daten gesprochener Befehle von dem fahrzeuggestützten Spracherkennungssystem durch ein Mobiltelefon in der Nähe des Fahrzeugs;
Anwenden einer Spracherkennungsfunktion auf die Daten gesprochener Befehle;
Ausführen des gesprochenen Befehls mit einer Anwendung; und
Senden einer auf dem Ausführungsschritt basierenden drahtlosen Antwortnachricht zu dem Fahrzeug.

10. Verfahren nach Anspruch 9, ferner mit den folgenden Schritten:
Bestimmen, daß der gesprochene Befehl von einem über das Internet zugänglichen abgesetzten Server verfügbare Daten anfordert;
Anfordern von Daten von dem abgesetzten Server;
Bereitstellen der Daten in der drahtlosen Antwortnachricht.

11. Verfahren nach Anspruch 9, ferner mit dem Schritt des Anwendens einer Kontextprozessoranwendung auf den gesprochenen Befehl, um den gesprochenen Befehl auszuführen.

12. Verfahren nach Anspruch 9, ferner mit dem Schritt des Bestimmens, welche von mehreren servergestützten Anwendungen bei der Ausführung des gesprochenen Befehls zu verwenden ist.

13. Spracherkennungssystem für ein Fahrzeug, umfassend:
ein Mikrofon (16), das dafür ausgelegt ist, einen gesprochenen Befehl von einem Fahrzeuginsassen zu empfangen;
eine Verarbeitungsschaltung (12), die dafür ausgelegt ist, zu bestimmen, ob das Spracherkennungssystem eine Anwendung aufweist, die dafür ausgelegt ist, den gesprochenen Befehl auszuführen und auf der Basis des gesprochenen Befehls Daten gesprochener Befehle zu erzeugen;
ein Spracherkennungsmodul, das dafür ausgelegt ist, eine auf Phonemen basierende Darstellung des gesprochenen Befehls zu erzeugen;
eine drahtlose Sender-/Empfängerschaltung (14) mit einer drahtlosen Verbindung mit einem Mobiltelefon (22), wobei die drahtlose Sender-/Empfängerschaltung (14) dafür ausgelegt ist, eine drahtlose Nachricht, die die Daten gesprochener Befehle umfaßt, und eine auf Phonemen basierende Darstellung der Daten gesprochener Befehle durch das Mobiltelefon (22) zu einem abgesetzten System (28) zu senden und Antwortdaten von dem abgesetzten System (28) zu empfangen, wobei die Verarbeitungsschaltung (12) dafür ausgelegt ist, eine auf den Antwortdaten basierende Funktion auszuführen.

14. Spracherkennungssystem nach Anspruch 13, wobei die Verarbeitungsschaltung ferner dafür ausgelegt ist, eine Telefon-Wählanwendung anzuwenden, um den gesprochenen Befehl auszuführen, wenn der gesprochene Befehl ein Telefon-Wählbefehl ist.

15. Spracherkennungssystem nach Anspruch 13, wobei das Bestimmen, ob das Spracherkennungssystem eine Anwendung aufweist, die dafür ausgelegt ist, den gesprochenen Befehl auszuführen, umfaßt, eine Spracherkennungsfunktion auf den gesprochenen Befehl anzuwenden, um ein erkanntes Wort zu erzeugen, und das erkannte Wort mit mehreren vorbestimmten Schlüsselwörtern zu vergleichen, um zu bestimmen, ob das Spracherkennungssystem eine Anwendung aufweist, die dafür ausgelegt ist, den gesprochenen Befehl auszuführen.

16. Spracherkennungssystem nach Anspruch 15, wobei, wenn das erkannte Wort nicht mit einem vorbestimmten Schlüsselwort übereinstimmt, der drahtlose Sender/Empfänger die Daten gesprochener Befehle zu dem abgesetzten System sendet.

17. Spracherkennungssystem nach Anspruch 13, wobei die Funktion dem Insassen auf der Basis der Antwortdaten eine Ausgabe gibt.

18. Spracherkennungssystem nach Anspruch 17, wobei die Verarbeitungsschaltung ferner dafür ausgelegt ist, den Antwortdatentext in Sprache umzusetzen, um dem Insassen eine Sprachantwort zu geben.

## Revendications

1. Procédé d'utilisation d'un système de reconnaissance vocale dans un véhicule, selon lequel :
une instruction orale est reçue d'un occupant du véhicule ;
le système détermine s'il dispose d'une application configurée pour exécuter l'instruction orale ;
une représentation de l'instruction orale à base de phonèmes est générée ;
sur la base de l'étape de détermination, un message radio comportant des données relatives à l'instruction orale et au moins une partie de la représentation à base de phonèmes est envoyé au moyen d'un émetteur-récepteur sans fil du système à un téléphone mobile situé à proximité du véhicule puis, par l'intermédiaire du téléphone mobile, à un système distant ;
des données de réponse provenant du système distant sont reçues ; et
une fonction basée sur les données de réponse est effectuée.

2. Procédé selon la revendication 1, comportant en outre l'étape consistant à : appliquer, sur la base de l'étape de détermination, une application de numérotation téléphonique afin d'exécuter l'instruction orale lorsque l'instruction orale est une instruction de numérotation téléphonique.

3. Procédé selon la revendication 1, l'étape d'envoi comportant l'envoi du message radio à un serveur distant de reconnaissance vocale.

4. Procédé selon la revendication 1, l'étape d'envoi comportant l'envoi du message radio dans un protocole de communications Bluetooth.

5. Procédé selon la revendication 1, l'étape de détermination comportant les étapes consistant à :
appliquer une fonction de reconnaissance vocale à l'instruction orale pour générer un mot reconnu ; et
comparer le mot reconnu à une pluralité de mots-clés prédéterminés pour déterminer si le système de reconnaissance vocale dispose d'une application configurée pour exécuter l'instruction orale.

6. Procédé selon la revendication 5, comportant en outre l'étape consistant, si le mot reconnu ne correspond pas à un mot-clé prédéterminé, à envoyer le message radio comportant des données relatives à l'instruction orale au système distant.

7. Procédé selon la revendication 1, la fonction fournissant une sortie à l'occupant sur la base des données de réponse.

8. Procédé selon la revendication 7, comportant en outre l'étape consistant à convertir le texte des données de réponse en parole afin de fournir une réponse vocale à l'occupant.

9. Procédé d'exploitation d'un serveur distant de reconnaissance vocale desservant un système de reconnaissance vocale embarqué sur un véhicule, comportant, au niveau du serveur distant de reconnaissance vocale, les étapes consistant à :
recevoir un message radio comportant des données relatives à l'instruction orale et une représentation à base de phonèmes des données relatives à l'instruction orale, en provenance du système de reconnaissance vocale embarqué sur le véhicule, par l'intermédiaire d'un téléphone mobile situé à proximité du véhicule ;
appliquer une fonction de reconnaissance vocale aux données relatives à l'instruction orale ;
exécuter l'instruction orale à l'aide d'une application ; et
envoyer au véhicule un message radio de réponse basé sur l'étape d'exécution.

10. Procédé selon la revendication 9, comportant en outre les étapes consistant à :
déterminer le fait que l'instruction orale demande des données disponibles sur un serveur distant accessible par Internet ;
demander les données au serveur distant ;
mettre les données à disposition dans le message radio de réponse.

11. Procédé selon la revendication 9, comportant en outre l'étape consistant à appliquer une application de traitement de contexte à l'instruction orale afin d'exécuter l'instruction orale.

12. Procédé selon la revendication 9, comportant en outre l'étape consistant à déterminer laquelle, parmi une pluralité d'applications résidant sur le serveur, est à utiliser lors de l'exécution de l'instruction orale.

13. Système de reconnaissance vocale pour véhicule, comportant :
un microphone (16) configuré de façon à recevoir une instruction orale d'un occupant du véhicule ;
un circuit (12) de traitement destiné à déterminer si le système de reconnaissance vocale dispose d'une application configurée pour exécuter l'instruction orale et à générer des données relatives à l'instruction orale sur la base de l'instruction orale ;
un module de reconnaissance vocale configuré de façon à générer une représentation de l'instruction orale à base de phonèmes ;
un circuit (14) d'émetteur-récepteur sans fil disposant d'une liaison sans fil avec un téléphone mobile (22), le circuit (14) d'émetteur-récepteur sans fil étant configuré de façon à émettre un message radio comportant les données relatives à l'instruction orale et une représentation à base de phonèmes des données relatives à l'instruction orale, par l'intermédiaire du téléphone mobile (22), à un système distant (28) et à recevoir des données de réponse provenant du système distant (28), le circuit (12) de traitement étant configuré de façon à effectuer une fonction sur la base des données de réponse.

14. Système de reconnaissance vocale selon la revendication 13, le circuit de traitement étant en outre configuré de façon à appliquer une application de numérotation téléphonique afin d'exécuter l'instruction orale lorsque l'instruction orale est une instruction de numérotation téléphonique.

15. Système de reconnaissance vocale selon la revendication 13, l'étape consistant à déterminer si le système de reconnaissance vocale dispose d'une application configurée pour exécuter l'instruction orale comprenant les étapes consistant à appliquer une fonction de reconnaissance vocale à l'instruction orale pour générer un mot reconnu et à comparer le mot reconnu à une pluralité de mots-clés prédéterminés pour déterminer si le système de reconnaissance vocale dispose d'une application configurée pour exécuter l'instruction orale.

16. Système de reconnaissance vocale selon la revendication 15, l'émetteur-récepteur sans fil transmettant, si le mot reconnu ne correspond pas à un mot-clé prédéterminé, les données relatives à l'instruction orale au système distant.

17. Système de reconnaissance vocale selon la revendication 13, la fonction fournissant une sortie à l'occupant sur la base des données de réponse.

18. Système de reconnaissance vocale selon la revendication 17, le circuit de traitement étant en outre configuré de façon à convertir le texte des données de réponse en parole afin de fournir une réponse vocale à l'occupant.
